# EUROPEAN PATENT SPECIFICATION

(11) **EP 0 564 054 B1**
(45) Date of publication and mention of the grant of the patent: **03.12.1997**
(21) Application number: 93201554.8
(22) Date of filing: 09.03.1990
(51) Int. Cl.: G08G 1/02

(54) **Traffic detection cable installation**
Kabeleinbau zur Überwachung des Strassenverkehrs
Installation de câbles pour la détection du trafic

(30) Priority: 10.03.1989 ZA 8901831; 04.04.1989 ZA 892457
(43) Date of publication of application: 06.10.1993
(62) Divisional of application: 90302554.2
(73) Proprietor: Gebert, Franz Josef, Verwoedburg Transvaal (ZA); Gebert, Rudiger Heinz, Verwoedburg Transvaal (ZA); Gebert, Ralf Dieter Heinrich, Verwoedburg Transvaal (ZA)
(72) Inventor: Gebert, Franz Josef, Verwoedburg Transvaal (ZA); Gebert, Rudiger Heinz, Verwoedburg Transvaal (ZA); Gebert, Ralf Dieter Heinrich, Verwoedburg Transvaal (ZA)
(74) Representative: Parry, Christopher Stephen

(56) References cited:
- EP-A- 0 287 250
- EP-A- 0 305 345
- US-A- 2 134 800
- US-A- 3 911 390

## Description

This invention relates to traffic detection apparatus, that is apparatus including detection cables for traffic monitoring. A typical area of application of the invention is in connection with traffic detector cables extended across roads.

The invention in principle can, however, also be employed in other aspects, for example, on vehicle runways, aircraft carrier take-off pads and in principle any other application where such detection or similar detection will be required.

The installation of cables for traffic monitoring presents difficult problems. Traditionally the cables have been stretched across the road surface but the deterioration of cables in service under these conditions can be exceptionally rapid, for example, in dense traffic only a matter of hours, and moreover unpredictable, being dependent upon traffic conditions, speeds of travel and other factors which are difficult to predict.

Sub-surface mounting of detectors in copper tubes or embedded in channels has been tried, but problems encountered have limited the success achieved.

Cables may be embedded in extruded profiles to protect and extend their life span. The embedded cables have a piezo-electric response, tribo-electric response or exhibit any other effect including capacitance based effects upon the receipt of a mechanical impulse and/or a physical strain associated with the impulse or stress field generated by the impulse.

EP-A-0305345 describes a system for the detection and recording of infringements of road traffic regulations using a laser. The system may be mounted on a vehicle or on the ground and employs three parallel beam generating sights. Two speed values are obtained and compared for verification.

EP-A-0287250 describes traffic measurement equipment in which detection cables may be housed in an extrusion embedded in the road surface.

US-A-3,911,390 describes an elongated traffic sensor strip having a plurality of separate segments each appropriately spaced along the sensor to monitor traffic in separate lanes of a multi-lane roadway.

As is known, cables embedded in profiles can be provided in a spaced parallel array for speed detection at a distance which is suitable for speed detection purposes.

A problem arises in providing duplicated arrays used in a duplicated measurement system as is prescribed by law in certain countries and is the practice in several others to provide legally sufficient proof of the breaking of speed limits for law enforcement purposes.

In particular cross cable interference effects present a problem requiring solution in this context.

The solution in accordance with this invention is to provide an array of profiles comprising three parallel spaced apart profiles, the first one to serve as a start cable for a first measurement, the second one to serve as a stop cable for that first measurement and simultaneously as a start cable for a second duplicated and confirmation measurement and a third cable to provide the stop signal for the second confirmation measurement.

The cables are separated to reduce to acceptable levels and/or levels which can be handled by suitable electronic circuitry and/or logic signal processing cross cable interference effects when an impulse is applied to the profile by passage of the vehicle wheels.

This separation may be achieved merely by a sufficient space between the detection cables.

The material of the profiles is selected to have an elasticity of a suitable kind for detection of impulses with minimal cross cable interference.

The material preferably has a Shore hardness of more than 65, more preferably approximately 85.

The array of cables in profiles may be provided either in an above surface or in a sub-surface installation.

The invention will be more fully described by way of examples with reference to the drawings, in which:
Figure 1 is a schematic longitudinal cross section through a road showing a sub-surface mounting; and
Figure 2 is a schematic longitudinal cross section through a road showing a top surface mounting.

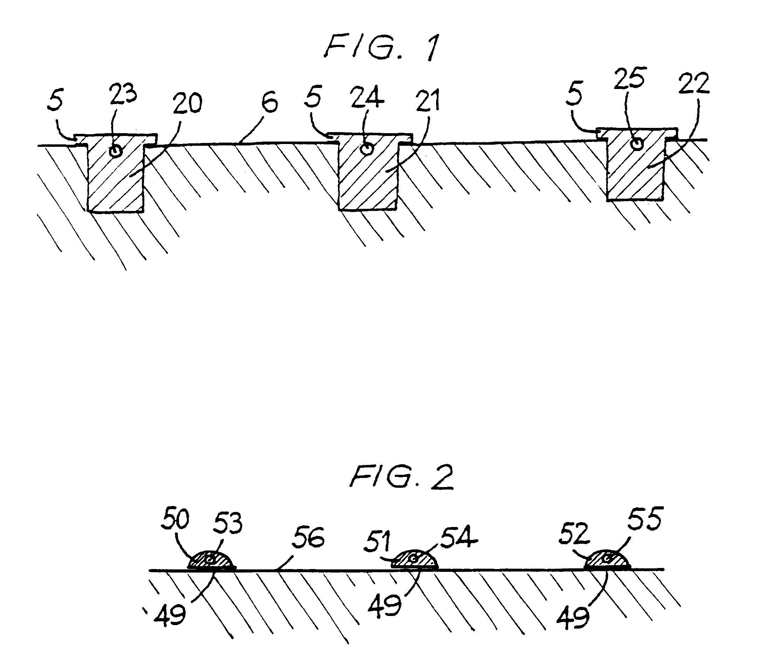

Figure 1 shows an array of three extrusions 20, 21 and 22 each containing a cable 23, 24 and 25 respectively. The array is so set up that cable 23 is a start cable for the first measurement, cable 24 a stop cable for the first measurement and a start cable for a second measurement and cable 25 a stop cable for the second measurement.

Figure 2 shows an array in accordance with the invention comprising three profiles 50, 51 and 52 each having a single cable 53, 54 and 55 respectively embedded in it. The cable 53 is wired as a start cable and the cable 54 as a stop cable related to the start cable 53 and simultaneously as a start cable and a cable 55 as a stop cable related to the start function of the cable 54. The road surface 6,56 is shown in Figures 1 and 2. Reinforcing foils, belts, webs, textiles or bands 49 can be provided as shown.

The profiles with cables embedded are placed on the road surface 6,56 and, for example, they may be tensioned on a road surface and optionally in addition or instead also bonded to the road surface by use of a suitable bonding material or glue or adhesive suitably adapted to the nature of the road surface. It is desirable to preserve the facility for this article to be rolled up and thereby stored conveniently.

## Claims

1. Traffic detection apparatus comprising a plurality of traffic detection cables (23,24,25; 53,54,55) provided in an array of profiles (20,21,22; 50,51,52), characterised in that the cables are separated to reduce cross cable interference effects, when an impulse is applied to the profile by passage of the vehicle wheels, to acceptable levels and/or levels which can be handled by suitable electronic circuitry and/or logic signal processing; the array including three parallel spaced apart profiles each housing a respective cable, the first one (23;53) to serve as a start cable for a first measurement, the second one (24;54) to serve as a stop cable for that first measurement and simultaneously as a start cable for a second duplicated and confirmation measurement and the third cable (25;55) to serve as a stop cable for the second confirmation measurement.

2. Apparatus as claimed in Claim 1, characterised by reinforcing foils, belts, webs, textiles or bands (49) provided at the base of the profile for above surface installation.

3. Apparatus as claimed in Claim 2, characterised in that the profile is adapted to be bonded to the road surface by use of a suitable bonding material or glue or adhesive suitably adapted to the nature of the road surface.

4. Apparatus as claimed in Claim 1, adapted for sub-surface mounting, the profiles (20,21,22) having a T shape with the bar (5) of the T proud of the road surface (6) and the embedded cables (23,24,25) are a distance below the top of the profile slightly more than the thickness of the bar (5) to reduce their exposure to damage.

## Patentansprüche

1. Verkehrssensorvorrichtung mit einer Anzahl von Verkehrssensorkabeln (23, 24, 25; 53, 54, 55) in einer Anordnung von Profilen (20, 21, 22; 50, 51, 52), dadurch gekennzeichnet, daß die Kabel so voneinander getrennt sind, daß Störungen von einem Kabel zum anderen, wenn von den Fahrzeugrädern beim Darüberfahren ein Impuls auf das Profil aufgegeben wird, auf annehmbare Niveaus herabgesetzt werden, bzw. auf Niveaus, die über geeignete elektronische Schaltungen und/oder logische Signalverarbeitung beherrscht werden können, wobei die Anordnung drei parallel im Abstand zueinander angeordnete Profile umfaßt, jeweils mit einem darin eingeschlossenen Kabel, wovon das erste (23; 53) für eine erste Messung dient, das zweite (24; 54) als ein Stoppkabel für diese erste Messung dient und gleichzeitig als ein Startkabel für eine zweite Duplikats- und Bestätigungsmessung und das dritte Kabel (25; 55) als Stoppkabel für die zweite Bestätigungsmessung dient.

2. Vorrichtung gemäß Anspruch 1, gekennzeichnet durch Verstärkungsfolien, Gurte, Gewebe, Textilbahnen oder Bänder (49), die an der Unterseite der Profile für die Verlegung auf der Oberfläche vorgesehen sind.

3. Vorrichtung gemäß Anspruch 2, dadurch gekennzeichnet, daß das Profil zur Haftung an der Straßenoberfläche ausgebildet ist durch Verwendung eines geeigneten Bindemittels oder Klebers oder Haftvermittlers, das oder der der Beschaffenheit der Straßenoberfläche angepaßt ist.

4. Vorrichtung gemäß Anspruch 1, eingerichtet für die Verlegung unterhalb der Straßenoberfläche, wobei die Profile (20, 21, 22) eine T-Form haben, wobei der Querbalken (5) des T's oberhalb der Straßenoberfläche (6) hervorragt und die eingebetteten Kabel (23, 24, 25), zwecks Verringerung der Beschädigungsgefahr, um ein wenig weiter unterhalb der Oberseite des Profils eingebettet sind als der Dicke des Querbalkens (5) entspricht.

## Revendications

1. Dispositif pour la détection du trafic constitué de plusieurs câbles de détection de trafic (23, 24, 25; 53, 54, 55) disposés dans un ensemble de profilés (20, 21, 22; 50, 51, 52), caractérisé en ce que les câbles sont séparés pour réduire les effets d'interférence entre les câbles à des niveaux acceptables et/ou à des nivaux qui peuvent être manipulés par des circuits éléctroniques appropriés et/ou par un traitement de signaux logiques, quand une impulsion est donnée au profilé pendant le passage des roues de véhicule. L'ensemble est composé de trois profilés éspacés de façon parallèle, chacun contenant un câble dont le premier (23; 53) sert de câble de démarrage pour une première mesure, le deuxième (24; 54) sert de câble d'arrêt pour cette première mesure et sert simultanément de câble de démarrrage pour une deuxième mesure pour duplication et confirmation, et le troisième câble (25; 55) sert de câble d'arrêt pour la seconde mesure de confirmation.

2. Dispositif selon la revendication 1, caracterisé par des feuilles métalliques de renfort, un ceinturage, un gainage, textiles ou bandes (49) dont la base du profilé est muni pour une installation à la surface.

3. Dispositif selon la revendication 2, caracterisé en ce que le profilé s'adapte pour adhérer à la surface routière en utilisant un liant approprié ou une colle ou un adhésif, adaptés à la nature de la surface routière.

4. Dispositif selon la revendication 1, adapté pour la mise en place sous la surface routière, les profilés (20, 21, 22) ayant la forme d'un T, la barre transversale (5) du T faisant saillie au dessus de la surface routière (6), les câbles (23, 24, 25) étant encastrés un peu plus bas que le côté supérieur du profilé et à une distance legèrement supérieure que l'épaisseur correspondante de la traverse (5) pour réduire le risque d'endommagement.
